# EUROPEAN PATENT SPECIFICATION

(11) **EP 2 744 702 B1**
(45) Date of publication and mention of the grant of the patent: **07.10.2015**
(21) Application number: 12759164.2
(22) Date of filing: 06.08.2012
(51) Int. Cl.: B63B 1/06

(54) **MARINE VESSEL OPERATING IN ICE-COVERED WATERS**
IN EISBEDECKTEN GEWÄSSERN EINSETZBARES WASSERFAHRZEUG
VAISSEAU DE MER OPÉRANT DANS DES EAUX COUVERTES DE GLACE

(30) Priority: 19.08.2011 FI 20115810
(43) Date of publication of application: 25.06.2014
(73) Proprietor: Aker Arctic Technology OY, 00980 Helsinki (FI)
(72) Inventor: MATTSSON, Tom, FI-00150 Helsinki (FI); SUOJANEN, Reko-Antti, FI-00200 Helsinki (FI); HAMBERG, Karl, FI-02170 Esbo (FI)
(74) Representative: Berggren Oy Ab
(86) International application number: PCT/FI2012/050768
(87) International publication number: WO 2013/026954

(56) References cited:
- EP-B1- 0 950 005
- WO-A2-2010/103170
- US-A- 3 557 736

## Description

The invention relates to a marine vessel according to the preamble of claim 1, which is capable of operating in ice-covered waters and has its hull provided with a bulbous bow or a corresponding protruding part located at least mostly below a load waterline.

When a vessel navigates in ice-covered waters, the result is a major additional resistance caused by ice. This additional resistance is generally considered resulting from a) energy required for breaking the ice, b) removal of ice blocks away from the vessel's path, and c) friction between the ship's shell plating and floating ice rubble. The additional resistance represents a considerable extra cost in the form of investment in more powerful machinery and increased fuel consumption. The high consumption of fuels and the emissions as a result thereof are particularly harmful as international regulations are particularly intended for reducing emissions.

The additional resistance caused by navigation in ice can be reduced in many ways. The preferred shaping of a ship's bow section bears an essential significance primarily from the standpoint of breaking the ice but also from the standpoint of a desired displacement of ice blocks.

In an effort to reduce friction between shell plating and ice, attention has been paid to the smoothness of shell plating by selecting high quality paints or coatings. Shell plates made in stainless steel have also been used. These solutions involve major investment and maintenance costs. One prior known method is also so-called air bubbling, one type of which is described for example in patent FI 47061 and the objective of which is the lubrication of shell plating by blowing air between shipboard and floating ice rubble. A similar lubrication effect is also the objective in various wetting systems as exemplified in US patent 4,543,900. These solutions call for complicated piping and pump systems and are themselves considerable energy consumers.

One solution has been described in the patent application WO2010/103170 A2, wherein a moderately large, substantially vertically directed pipe or conduit is used for passing a powerful flow of water to the ice or ice field encountered by the vessel in an effort to at least assist in breaking the ice and to flush floating ice rubble away from the vessel. This solution also requires the installation and operation of a major pumping unit.

This invention relates most preferably to a sizable ship, e.g. a tanker, a freighter, a ferry or the like, which is provided with a bulbous bow or a corresponding protruding part, extending forward of the bow and being located, at least when the vessel is in full load, at least for the most part below the waterline. More precisely, the bulbous bow extends further forward than an end point of the load waterline. Generally, the bow section of such vessels is provided with one or several rudder propellers, which are installed in a transverse tunnel and which are used mostly in harbor areas and in the process of berthing for improved handling of the vessel.

One optional way of implementing a bow rudder propeller has been disclosed in patent EP 0 950 005 B1. It does not include an actual transverse tunnel, but, instead, the rudder propeller can be pivoted down to a working position, or it may operate in a recess formed in the hull.

It is an object of the invention to provide a structurally beneficial and versatile solution for a marine vessel operating in ice-covered waters. A particular object of the invention is to provide a solution, which enables making use of the above-mentioned rudder propeller solutions and which enables a substantial improvement in the ice-going properties of a vessel.

The objectives of the invention are attained as described more precisely mainly in claim 1, as well as in other claims. According to the invention, the vessel has its bulbous bow or the like protruding part provided with a channel system, comprising a first channel part extending in a substantially horizontal direction through the bulbous bow or the like protruding part transversely relative to a longitudinal axis of the vessel, and a second channel part extending through the bulbous bow or the like protruding part at least substantially from below to above the bulbous bow or the like protruding part. The bulbous bow or the like protruding part is additionally provided with pump elements, a propeller, or the like, which are adapted to generate a powerful flow of water arranged to be directed by way of either one of said channel parts as required by each operation and need of the vessel. Thus, one and the same propeller or pump unit can be preferably utilized both for maneuvering the vessel and for reducing the additional resistance caused by ice, primarily by reducing the friction between the hull and the ice.

As said channel parts have a common junction point, said pump elements, propeller, or the like can be preferably mounted pivotably at said junction point, such that the selection of that channel part, in whose direction the generation of a flow is primarily desired, is achievable by pivoting the pump elements, the propeller, or the like.

According to one solution, the pump elements, the propeller, or the like are accommodated inside a cylinder element or a corresponding pivotably arranged structural member, the selection of a channel part being achieved by rotating the cylinder element relative to its axis.

In another solution, the channel parts have a common channel, which extends to a base of the bulbous bow or the like protruding part and which is provided with said pump elements, the propeller, or the like. In this case, the channel parts are adapted to branch out from each other downstream of said common channel. In this solution, the channel system comprises means, for example flap elements, for controlling the flow of water amongst the channel parts.

In one embodiment of the invention, said first channel part is mostly open in the direction of a bottom side of the bulbous bow or the like protruding part. Hence, the arrangement can be preferably such that said pump elements, the propeller, or the like are displaceable to a location below the bulbous bow or the corresponding protruding part in such a way that the flow of water generated thereby is guidable also longitudinally of the vessel's hull, as well as laterally in a transverse direction. The vessel's ice-going properties can be enhanced by arranging said first channel part to branch out at its top portion so as to comprise two or more discharge openings on a top surface of the bulbous bow or the like protruding part.

The invention will now be described by way of example with reference to the accompanying schematic drawings, in which
- Fig. 1 shows an embodiment of the invention in a side view, partly in section and in a first operating position,
- Fig. 2 shows a section II-II of Fig. 1,
- Fig. 3 shows the embodiment of Fig. 1 in a side view, partly in section and in a second operating position,
- Fig. 4 shows a section IV-IV of Fig. 3,
- Fig. 5 shows a second embodiment of the invention in a side view, partly in section and in a first operating position,
- Fig. 6 shows a section VI-VI of Fig. 5,
- Fig. 7 shows the embodiment of Fig. 5 in a side view, partly in section and in a second operating position,
- Fig. 8 shows a section VIII-VIII of Fig. 7,
- Fig. 9 shows a detail of Figs. 5 and 7 in enlargement,
- Fig. 10 shows a third embodiment of the invention in a side view and partly in section,
- Fig. 11 shows a section XI-XI of Fig. 10,
- Fig. 12 shows a fourth embodiment of the invention in a side view and partly in section,
- Fig. 13a shows a section XIII-XIII of Fig. 12 in a first operating position,
- Fig. 13b shows the section XIII-XIII of Fig. 12 in a second operating position,
- Fig. 13c shows the section XIII-XIII of Fig. 12 in an alternative configuration,
- Fig. 14 shows a fifth embodiment of the invention in a side view and in a first operating position,
- Fig. 15 shows a section XV-XV of Fig. 14,
- Fig. 16 shows the embodiment of Fig. 14 in a side view and in a second operating position,
- Fig. 17 shows a section XVI-XVI of Fig. 16,
- Fig. 18 shows the embodiment of Fig. 14 in a side view and in a third operating position, and
- Fig. 19 shows a section XVII-XVII of Fig. 18.

In the drawings, reference numeral 1 stands for a marine vessel hull, which is provided with a bulbous bow or the like protruding part 1a, located below a load waterline A of the vessel and subsequently abbreviated as a bulbous bow 1 a. This bulbous bow 1a, which is located mostly below the waterline A, is provided with a channel system, comprising a first channel part 2 which extends mainly in a horizontal direction through the bulbous bow 1 a transversely relative to the vessel's longitudinal axis. The bulbous bow 1a includes additionally a second channel part 3, which extends through the bulbous bow 1 a principally from below to above the same. Furthermore, the bulbous bow 1a is provided with a propeller 4 or the like, which is operated through the action of a motor 5 and a shaft 6 driven thereby, which enables generating a powerful flow of water directed by way of either one of said channel parts as required by each operation and need of the vessel.

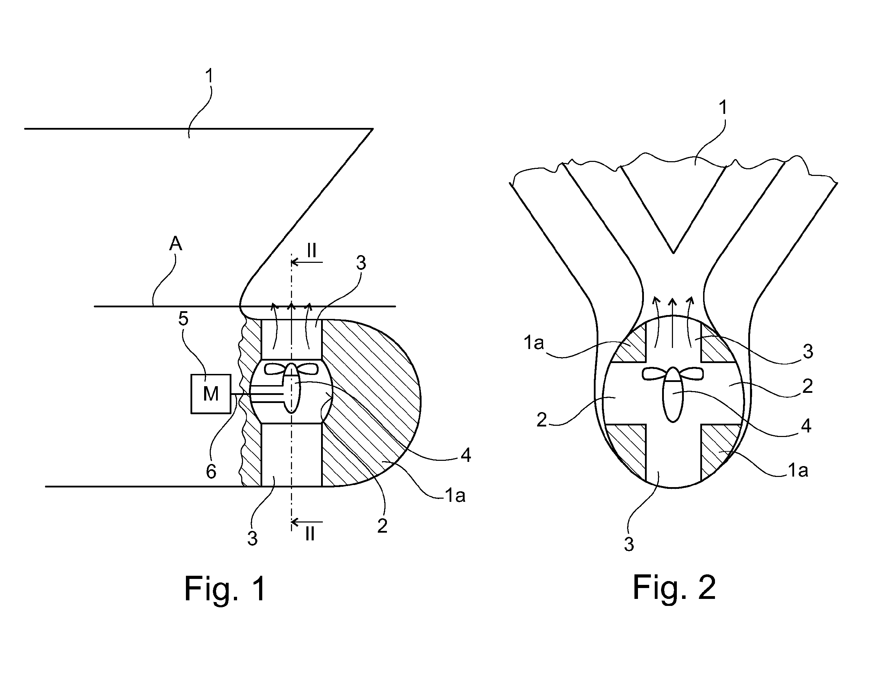

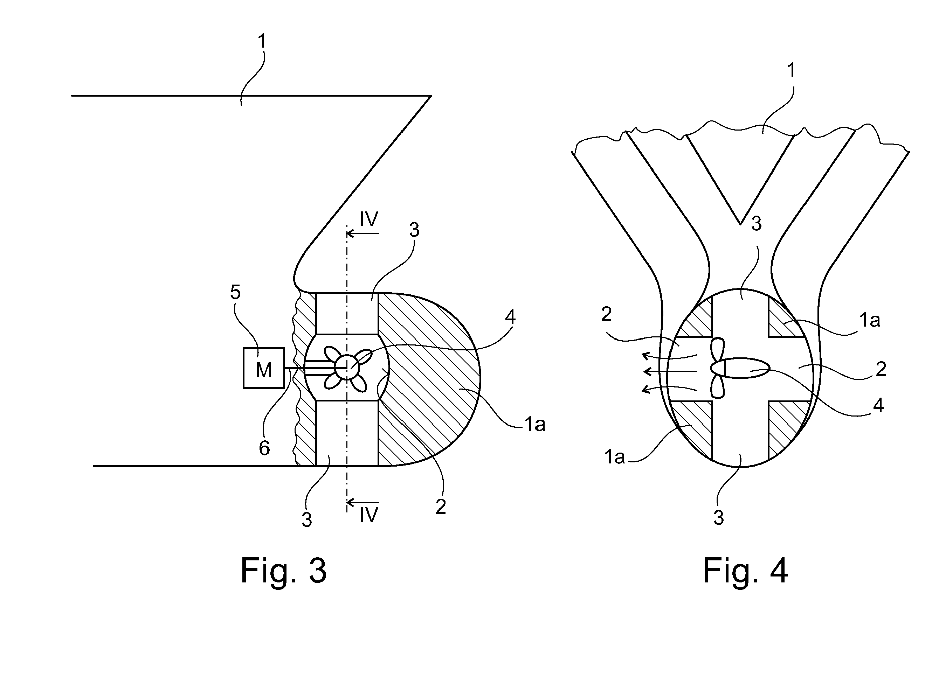

In the embodiment and condition of figs. 1 and 2, the first channel part 2 is mainly horizontal and the second channel part 3 is mainly vertical, and the propeller is in a position in which the flow of water proceeds by way of the second channel part 3 as indicated with arrows. Respectively, in the condition of figs. 3 and 4, the propeller 4 has been pivoted to a position in which the flow of water proceeds through the first channel part 2 from right to left in fig. 4. Accordingly, when it is desirable to establish the flow of water to proceed from left to right in fig. 4, the propeller 4 is simply pivoted half a circle around, or the propeller rotation direction is reversed, or the propeller pitch is changed. Hence, it is the propeller 4 in itself and its pivoted position which convey the flow of water into a desired channel part and in a desired direction.

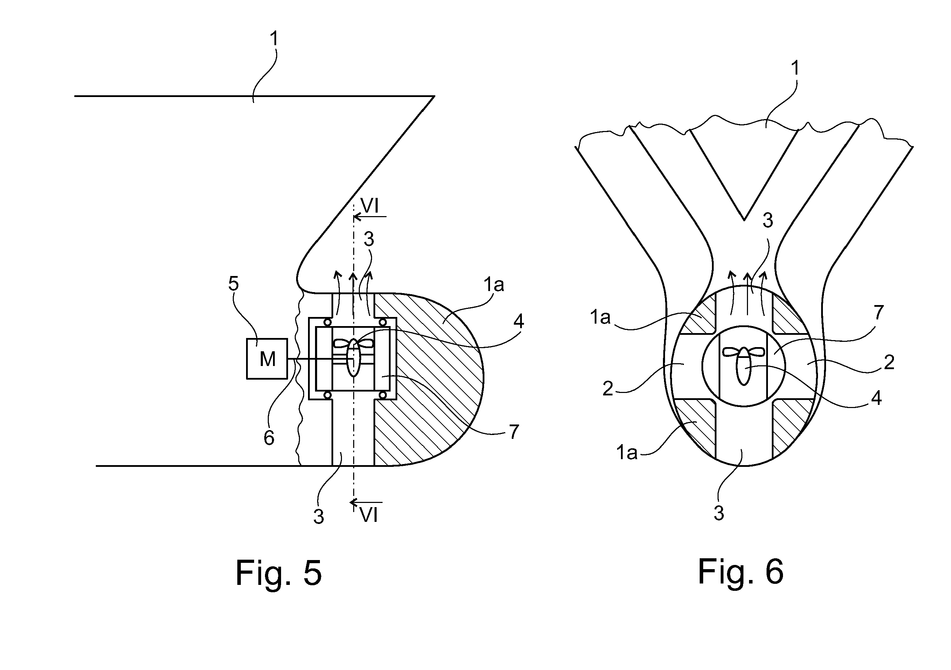

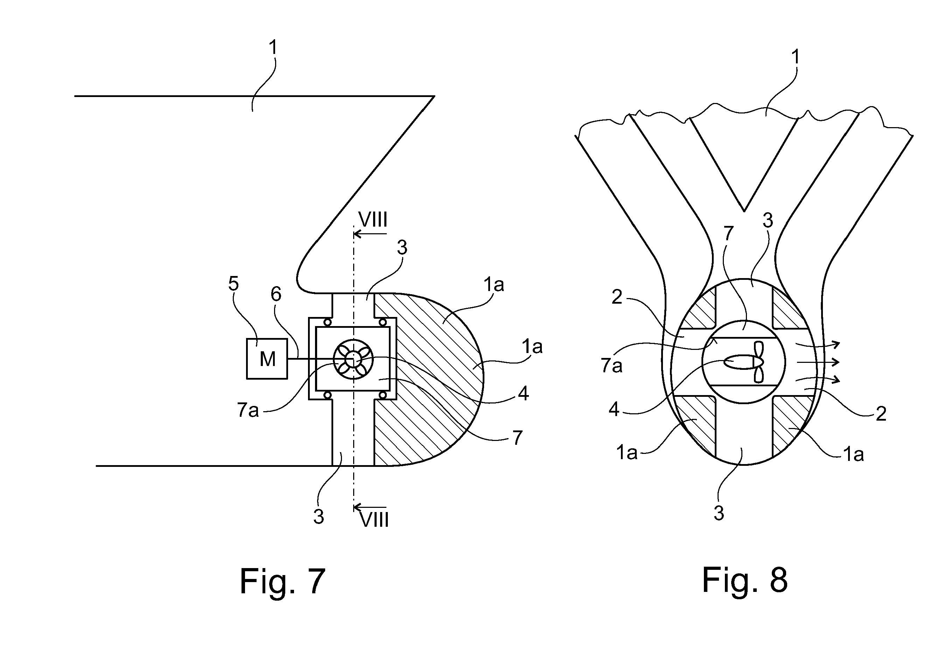

In figs. 5-9, the embodiment differs from the previous one in that the propeller 4 is positioned inside a cylinder element 7 in a channel 7a, the flow of water proceeding through this channel 7a. Thus, the flow of water can be directed into the desired first channel part 2 or second channel part 3, and in a desired direction in the first channel part 2, simply by rotating the cylinder element 7 in such a way that the channel 7a coincides with the relevant channel part. The direction of flow in the first channel part 2 can also be reversed by switching the propeller rotation direction or by changing the propeller pitch.

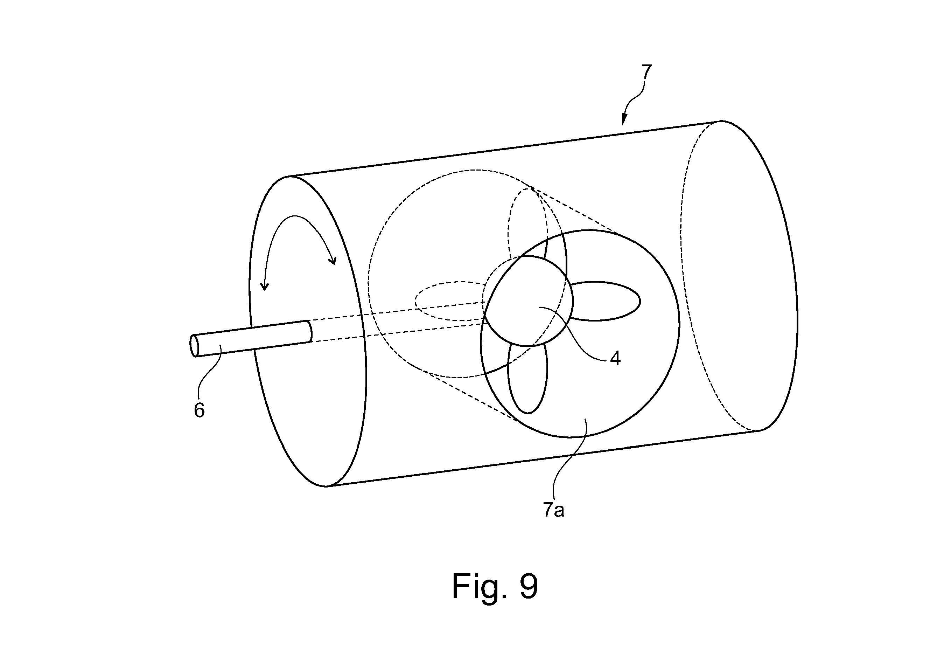

The cylinder element 7 of fig. 9 is just an exemplary solution, other geometric shapes are also conceivable, such as e.g. a spherical shape.

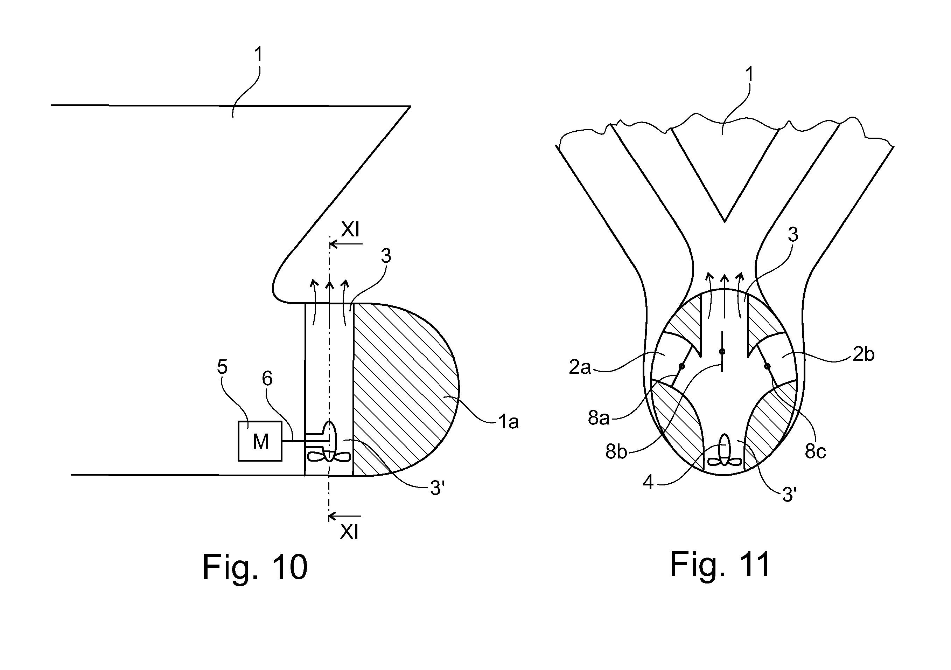

In the embodiment of figs. 10 and 11, the channel parts 2a and 2b have a common channel 3', which extends below the bulbous bow 1 a and in which the propeller 4 is accommodated. Hence, in this case, the propeller 4 is always in the same position, whereby the guidance of the flow of water is carried out by means of pivotable flap elements 8a, 8b and 8c installed in channel parts 2a, 2b and the second channel part 3. In the condition of fig. 11, these flap elements are in a position in which the flow of water is directed into the second channel part 3. Here, the motor 5 drives the propeller through a herringbone gear, the motor being disposed horizontally flush with the propeller 4.

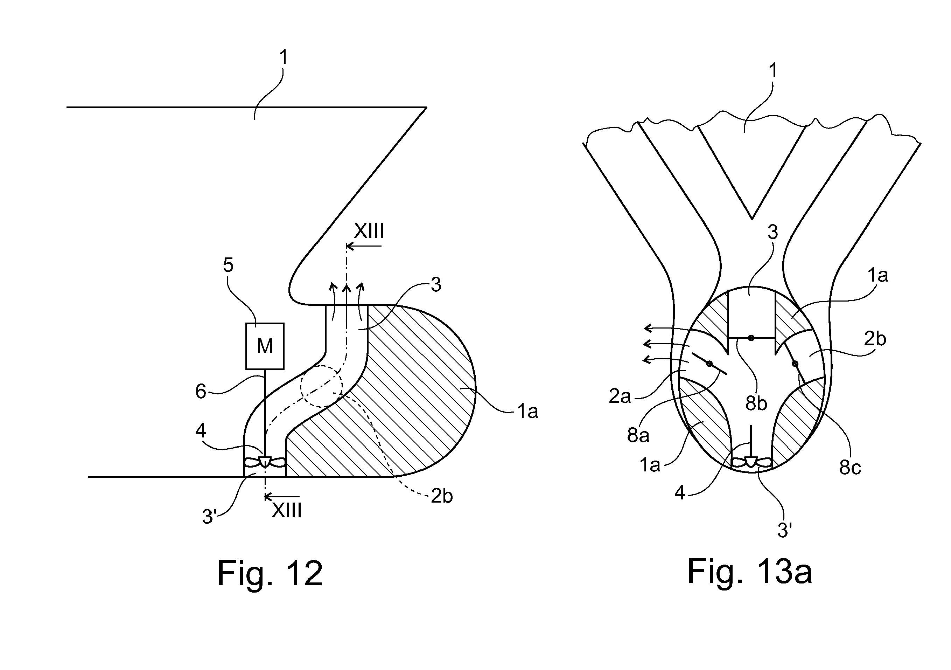

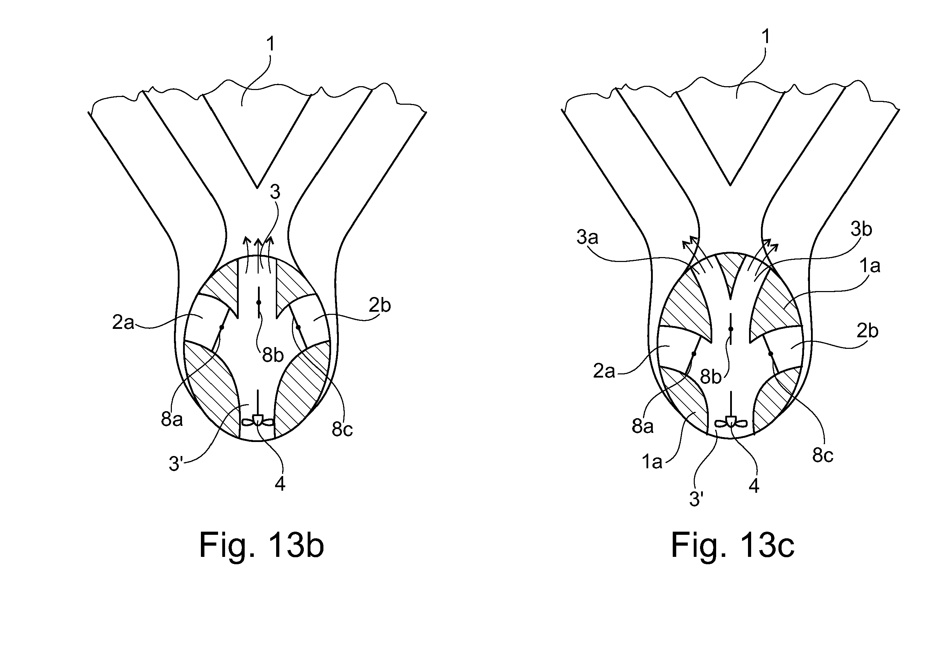

The embodiment of figs. 12, 13a, 13b and 13c differs from that of figs. 11 and 12 particularly in terms of where the motor 5 is located, the motor's shaft 6 controlling directly the propeller 4. Due to the disposition of a motor, the common channel 3' of the first channel part 2 and the second channel part 3 has bends formed therein. This has enabled a more beneficial and higher position for the motor with respect to the ship's bottom structures. The channel part extending upwards from the bottom must typically have its top portion placed at a base of the bulbous bow 1 a. A preferred disposition for the propeller 4, its possible pivoting mechanism and drive motor 5 with its maintenance facilities, is further back for providing the same with more space.

Figs. 13a and 13b demonstrate how the flow of water is passed by way of various channel parts in response to operating the flap elements 8a, 8b and 8c. The embodiment of figs. 13 and 13b differs from that of fig. 13c in the sense that the second channel part 3 bifurcates downstream of the channel parts 2a and 2b into two separate branches 3a and 3b. If necessary, there could be more of these branches for thereby providing respectively more discharge openings at various points in a top portion of the bulbous bow 1a, which would contribute to enhancing the vessel's ice-going properties.

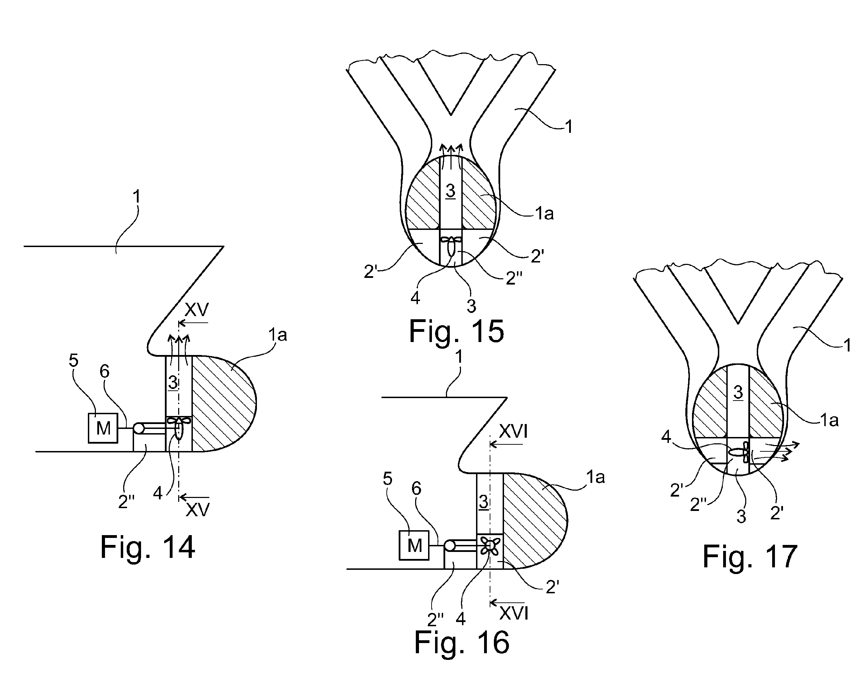

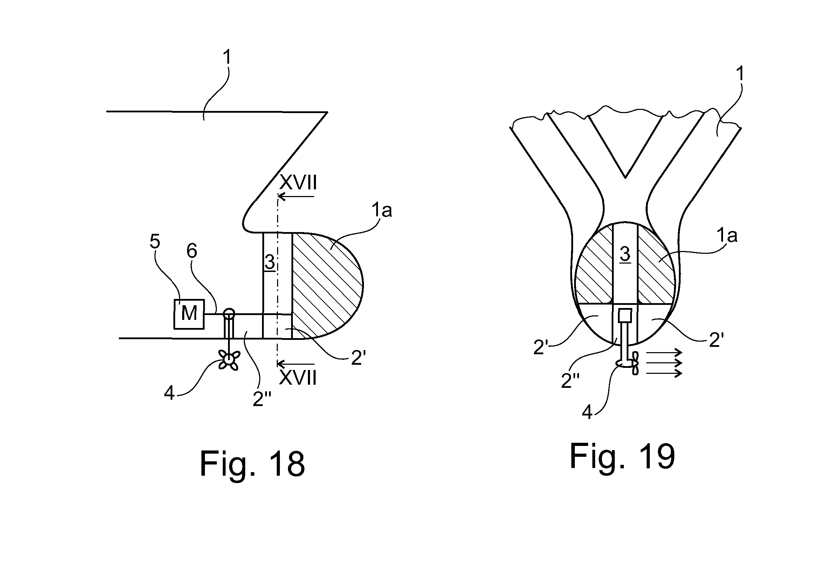

In the embodiment of figs. 14-19, the channel part 2' is mostly open at a bottom portion of the bulbous bow 1 a. The propeller 4 is pivotable to an alignment with the channel part 2' and the second channel part 3 for directing the flow of water therein as desired at a given time. As apparent from figs. 18 and 19, the entire propeller, along with its support members, is pivotable as indicated in the figures to below the bulbous bow 1a, such that the flow of water generated thereby is guidable in a transverse direction, as well as preferably also longitudinally of the vessel's hull. For this purpose, the channel part 2' features an enlargement 2" for the pivoting mechanism. In this position, the vessel's steerability is further improved, because the propeller can be pivoted horizontally in any direction.

The invention is not limited to the presented embodiments, but several variants are conceivable within the scope of the appended claims.

## Claims

1. A marine vessel operating in ice-covered waters, having its hull (1) provided with a bulbous bow (1 a) or a corresponding protruding part located at least for the most part below a load waterline (A), **characterized in that** the bulbous bow (1 a) or the corresponding protruding part is provided with a channel system, comprising a first channel part (2; 2a, 2b; 2') extending in a substantially horizontal direction through the bulbous bow (1a) or the corresponding protruding part transversely relative to a longitudinal axis of the vessel, and a second channel part (3; 3a,3b) extending through the bulbous bow (1a) or the corresponding protruding part at least substantially from below to above the bulbous bow (1 a) or the corresponding protruding part, and **in that** the bulbous bow (1a) or the corresponding protruding part is additionally provided with pump elements, a propeller (4), or the like, which are adapted to generate a powerful flow of water arranged to be directed by way of either one of said channel parts (2; 2a, 2b; 2'; 3, 3a, 3b) as required by each operation and need of the vessel.

2. A vessel according to claim 1, **characterized in that** said channel parts (2; 2a, 2b; 2'; 3, 3a, 3b) have a common junction point.

3. A vessel according to claim 2, **characterized in that** said pump elements, the propeller (4), or the like are mounted pivotably at said junction point, such that the selection of a channel part is achievable by pivoting the pump elements, the propeller (4), or the like.

4. A vessel according to claim 3, **characterized in that** the pump elements, the propeller (4), or the like are accommodated inside a cylinder element (7) or a corresponding pivotably arranged structural member, the selection of a channel part being achieved by rotating the cylinder element (7) relative to its axis.

5. A vessel according to claim 1 or 2, **characterized in that** said channel parts (2; 2a, 2b; 2'; 3, 3a, 3b) have a common channel (3'), which extends to a base of the bulbous bow (1 a) or the corresponding protruding part and which is provided with said pump elements, the propeller (4), or the like, and **in that** said channel parts (2; 2a, 2b; 2'; 3, 3a, 3b) are adapted to branch out from each other downstream of said common channel (3').

6. A vessel according to claim 5, **characterized in that** the channel system comprises means, for example flap elements (8a, 8b, 8c), for controlling the flow of water amongst the channel parts.

7. A vessel according to any of claims 1-3, **characterized in that** said first channel part (2') is mostly open in the direction of a bottom side of the bulbous bow (1 a) or the corresponding protruding part.

8. A vessel according to claim 7, **characterized in that** said pump elements, the propeller (4), or the like are displaceable to a location below the bulbous bow (1 a) or the corresponding protruding part in such a way that the flow of water generated thereby is guidable also longitudinally of the vessel's hull (1).

9. A vessel according to any of the preceding claims, **characterized in that** said first channel part is adapted to branch out (3a, 3b) at its top portion so as to comprise two or more discharge openings on a top surface of the bulbous bow (1a) or the like protruding part.

## Patentansprüche

1. In eisbedeckten Gewässern einsetzbares Wasserfahrzeug, dessen Rumpf (1) mit einem bauchigen Bogen (1a) oder einem entsprechenden vorspringenden Teil versehen ist, der sich wenigstens zum Großteil unter einer Ladewasserlinie (A) befindet, **dadurch gekennzeichnet, dass** der bauchige Bogen (1a) oder der entsprechende vorspringende Teil mit einem Kanalsystem versehen ist, das einen ersten Kanalteil (2; 2a, 2b; 2'), der sich in Bezug auf eine Längsachse des Fahrzeugs quer in einer im Wesentlichen waagerechten Richtung durch den bauchigen Bogen (1a) oder den entsprechenden vorspringenden Teil erstreckt, und einen zweiten Kanalteil (3; 3a, 3b), der sich im Wesentlichen von unterhalb des bauchigen Bogens (1a) oder des entsprechenden vorspringenden Teils bis über diesen durch den bauchigen Bogen (1a) oder den entsprechenden vorspringenden Teil erstreckt, umfasst, und dass der bauchige Bogen (1a) oder der entsprechende vorspringende Teil zudem mit Pumpelementen, einer Schraube (4) oder dergleichen versehen ist, die dazu geeignet sind, einen kräftigen Wasserstrom zu erzeugen, der derart gestaltet ist, dass er mittels eines der Kanalteile (2; 2a, 2b; 2'; 3: 3a, 3b) wie durch jeden Betrieb und Bedarf des Fahrzeugs erforderlich gerichtet wird.

2. Fahrzeug nach Anspruch 1, **dadurch gekennzeichnet, dass** die Kanalteile (2; 2a, 2b; 2'; 3: 3a, 3b) einen gemeinsamen Verbindungspunkt aufweisen.

3. Fahrzeug nach Anspruch 2, **dadurch gekennzeichnet, dass** die Pumpelemente, die Schraube (4) oder dergleichen schwenkbar an dem Verbindungspunkt angebracht sind, so dass die Wahl eines Kanalteils durch Schwenken der Pumpelemente, der Schraube (4) oder dergleichen erreicht werden kann.

4. Fahrzeug nach Anspruch 3, **dadurch gekennzeichnet, dass** die Pumpelemente, die Schraube (4) oder dergleichen im Inneren eines Zylinderelements (7) oder eines entsprechenden schwenkbar eingerichteten Strukturelements untergebracht sind, wobei die Wahl eines Kanalteils durch Drehen des Zylinderelements (7) in Bezug auf seine Achse erreicht wird.

5. Fahrzeug nach Anspruch 1 oder 2, **dadurch gekennzeichnet, dass** die Kanalteile (2; 2a, 2b; 2'; 3: 3a, 3b) einen gemeinsamen Kanal (3') aufweisen, der sich zu einer Basis des bauchigen Bogens (1a) oder des entsprechenden vorspringenden Teils erstreckt, und der mit den Pumpelementen, der Schraube (4) oder dergleichen versehen ist, und dass die Kanalteile (2; 2a, 2b; 2'; 3: 3a, 3b) so angepasst sind, dass sie sich stromabwärts von dem gemeinsamen Kanal (3') voneinander verzweigen.

6. Fahrzeug nach Anspruch 5, **dadurch gekennzeichnet, dass** das Kanalsystem Mittel, zum Beispiel Klappenelemente (8a, 8b, 8c), umfasst, um den Strom des Wassers unter den Kanalteilen zu steuern.

7. Fahrzeug nach einem der Ansprüche 1 bis 3, **dadurch gekennzeichnet, dass** der erste Kanalteil (2') in der Richtung einer Unterseite des bauchigen Bogens (1a) oder des entsprechenden vorspringenden Teils größtenteils offen ist.

8. Fahrzeug nach Anspruch 7, **dadurch gekennzeichnet, dass** die Pumpelemente, die Schraube (4) oder dergleichen auf eine solche Weise zu einer Stelle unter dem bauchigen Bogen (1a) oder dem entsprechenden vorspringenden Teil verschiebbar sind, dass der dadurch erzeugte Strom des Wassers auch in der Längsrichtung des Rumpfs (1) des Fahrzeugs lenkbar ist.

9. Fahrzeug nach einem der vorhergehenden Ansprüche, **dadurch gekennzeichnet, dass** der erste Kanalteil so angepasst ist, dass er sich an seinem oberen Abschnitt derart verzweigt (3a, 3b), dass er an einer oberen Fläche des bauchigen Bogens (1a) oder des entsprechenden vorspringenden Teils zwei oder mehr Ausstoßöffnungen umfasst.

## Revendications

1. Navire marin opérant dans des eaux recouvertes de glace, ayant sa coque (1) dotée d'une étrave à bulbe (1a) ou d'une partie en saillie correspondante située au moins pour la plupart en-dessous d'une ligne de flottaison en charge située (A), **caractérisé en ce que** l'étrave à bulbe (1a) ou la partie en saillie correspondante est dotée d'un système de canal, comprenant une première partie de canal (2 ; 2a, 2b ; 2') s'étendant dans une direction essentiellement horizontale à travers l'étrave à bulbe (1a) ou la partie en saillie correspondante transversalement à un axe longitudinal du navire, et une seconde partie de canal (3 ; 3a, 3b) s'étendant à travers l'étrave à bulbe (1a) ou la partie en saillie correspondante au moins essentiellement du dessous à au-dessus de l'étrave à bulbe (1a) ou de la partie en saillie correspondante, et **en ce que** l'étrave à bulbe (1a) ou la partie en saillie correspondante est dotée en outre d'éléments de pompe, d'une hélice (4), ou similaire, qui sont adaptés pour générer un débit d'eau puissant agencé pour être dirigé au moyen de n'importe laquelle des parties de canal (2 ; 2a, 2b ; 2' ; 3 ; 3a, 3b) tel que requis par chaque opération et besoin du navire.

2. Navire selon la revendication 1, **caractérisé en ce que** les parties de canal (2 ; 2a, 2b ; 2' ; 3 ; 3a, 3b) ont un point de jonction commun.

3. Navire selon la revendication 2, **caractérisé en ce que** les éléments de pompe, l'hélice (4) ou similaire sont montés de façon pivotante sur le point de jonction, de telle sorte que la sélection d'une partie de canal peut être obtenue en pivotant les éléments de pompe, l'hélice (4) ou similaire.

4. Navire selon la revendication 3, **caractérisé en ce que** les éléments de pompe, l'hélice (4) ou similaire sont logés à l'intérieur d'un élément de cylindre (7) ou d'un élément structurel agencé pivotant de façon correspondante, la sélection d'une partie de canal étant obtenue en faisant tourner l'élément de cylindre (7) par rapport à son axe.

5. Navire selon la revendication 1 ou 2, **caractérisé en ce que** les parties de canal (2 ; 2a, 2b ; 2' ; 3 ; 3a, 3b) ont un canal commun (3') qui s'étend vers une base de l'étrave à bulbe (1a) ou la partie en saillie correspondante et qui est doté des éléments de pompe, de l'hélice (4) ou similaire, et **en ce que** les parties de canal (2 ; 2a, 2b ; 2' ; 3 ; 3a, 3b) sont adaptées pour dériver l'une de l'autre en aval du canal commun (3').

6. Navire selon la revendication 5, **caractérisé en ce que** le système de canal comprend des moyens, par exemple des éléments de volet (8a, 8b, 8c) pour commander le débit d'eau parmi les parties de canal.

7. Navire selon l'une quelconque des revendications 1 à 3, **caractérisé en ce que** la première partie de canal (2') est pour la plupart ouverte en direction d'un fond de l'étrave à bulbe (1a) ou de la partie en saillie correspondante.

8. Navire selon la revendication 7, **caractérisé en ce que** les éléments de pompe, l'hélice (4) ou similaire peuvent être déplacés vers un endroit en-dessous de l'étrave à bulbe (1a) ou de la partie en saillie correspondante de telle façon que le débit d'eau généré à cet effet peut être également guidé le long de la coque (1) du navire.

9. Navire selon l'une quelconque des revendications précédentes, **caractérisé en ce que** la première partie de canal est adaptée pour dériver (3a, 3b) sur sa partie supérieure de façon à comprendre deux ou plusieurs ouvertures de décharge sur une surface supérieure de l'étrave à bulbe (1a) ou de la partie en saillie correspondante.
